(19) Europäisches Patentamt
European Patent Office
Office européen des brevets

(11) **EP 2 001 183 A1**

(12) **EUROPEAN PATENT APPLICATION**

(43) Date of publication:
**10.12.2008 Bulletin 2008/50**

(51) Int Cl.:
*H04L 27/26* (2006.01)  *H04L 5/02* (2006.01)
*H04L 1/00* (2006.01)

(21) Application number: **07425357.6**

(22) Date of filing: **07.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Nokia Siemens Networks S.p.A.
20126 Milano (IT)**

(72) Inventors:
• **Greco, Daniela
84060 Rodio (SA) (IT)**
• **Sorrentino, Stefano
20133 Milan (IT)**

(54) **Method for diversity allocating same user's codewords on plural OFDMA bands in a wireless communication network**

(57) An OFDMA transmitter for a WiMAX system encompasses a baseband processor that includes: a convolutional encoder, an interleaver, a modulator and a mapper of FEC sub-blocks onto AMC bands of adjacent sub-carriers. A data burst relevant to a user scheduled for the transmission in the current subframe on N bands, enters the encoder to be encoded as unique FEC block. The baseband processor includes a N-output splitter of this FEC block into N sub-blocks to be forwarded to the mapper. The splitter position in relation of the other elements can be designed according to different strategies; a most efficient one suitable for different MCSs on the AMC bands has the following architecture:

- the convolutional encoder with cascaded the interleaver and the N-output splitter;
- each FECn sub-block at one output n-th of the splitter is directed to a cascade of: deinterleaver, puncturer, interleaver, and modulator;
- a N-input mapper is cascaded to the N modulators for allocating the FEC sub-blocks in agreement with the following splitting strategy: the splitter subdivides the FEC block into N sequential FECn sub-blocks, and then subdivides each FECn$^{th}$ sub-block into N parallel fractional sub-blocks. For each FECn$^{th}$ sub-block of the sequence from 1 to N, the mapper assigns the fractional sub-blocks of the FECn$^{th}$ sub-block to the N scheduled bands transmitted during the fractional sub-block time (fig.13).

## Structure of the proposed transmitter for diversity AMC

FIG. 13

**Description**

**FIELD OF THE INVENTION**

The present invention relates to communication networks, and in particular to a method for in-diversity allocating same user's codewords on plural OFDMA (Orthogonal Frequency Division Multiple Access) bands in a wireless communication network.

The invention is developed with specific attention paid to its possible use in Mobile Wireless Broadband Access networks conforming to IEEE std 802.16-2004 as amended by IEEE 802.16e-2005 and IEEE 802.16g.

The current reference texts for the standards mentioned in the foregoing are the following:

- EEE Computer Society and IEEE Microwave Theory and Techniques Society, "IEEE Standard for Local and Metropolitan Area Networks Part 16: Air Interface for Fixed Broadband Wireless Access Systems", IEEE Std 802.16-2004 (Revision of IEEE Std 802.16-2001), 1 October 2004;

- IEEE Computer Society and IEEE Microwave Theory and Techniques Society, "IEEE Standard for Local and Metropolitan Area Networks Part 16: Air Interface for Fixed Broadband Wireless Access Systems" Amendment 2: Physical and Medium Access Control Layers for Combined Fixed and Mobile Operation in Licensed Bands and Corrigendum 1, 28 February 2006; and

- IEEE Computer Society and IEEE Microwave Theory and Techniques Society, "Draft IEEE Standard for Local and Metropolitan Area Networks Part 16: Air Interface for Fixed and Mobile Broadband Wireless Access Systems - Management Plane Procedures and Services", IEEE P802.16g/D7, January 2007.

Further exemplary of networks to which the invention may apply are Mobile WiMAX (Worldwide interoperability for Microwave Access) networks, based on the IEEE 802.16 specifications.

The current reference texts for the Mobile WIMAX networks are the following:

- WiMAX Forum, "WiMAX End-to-End Network Systems Architecture (Stage 2: Architecture Tenets, Reference Model and Reference Points)", Revision 1.0.0: 2007-03-09, draft;
- WiMAX Forum, "WiMAX End-to-End Network Systems Architecture (Stage 3: Detailed Protocols and Procedures)", Revision 1.0.0: 2007-03-09, draft.

**BACKGROUND ART**

WiMAX networks are based on Spread-spectrum techniques, possibly integrated with Multiple Input Multiple Output (MIMO) antenna technology for increasing the efficiency of data communications by increasing data throughput thanks to the increased robustness against interferences and selective fading (Rayleigh). Orthogonal Frequency Division Multiplexing (OFDM) and successively OFDMA are used for accessing the medium at physical layer, in both cases multiple non-interfering subcarriers are transmitted simultaneously. In IEEE 802.16e, the OFDMA approach has been extended to mobile subscribers.

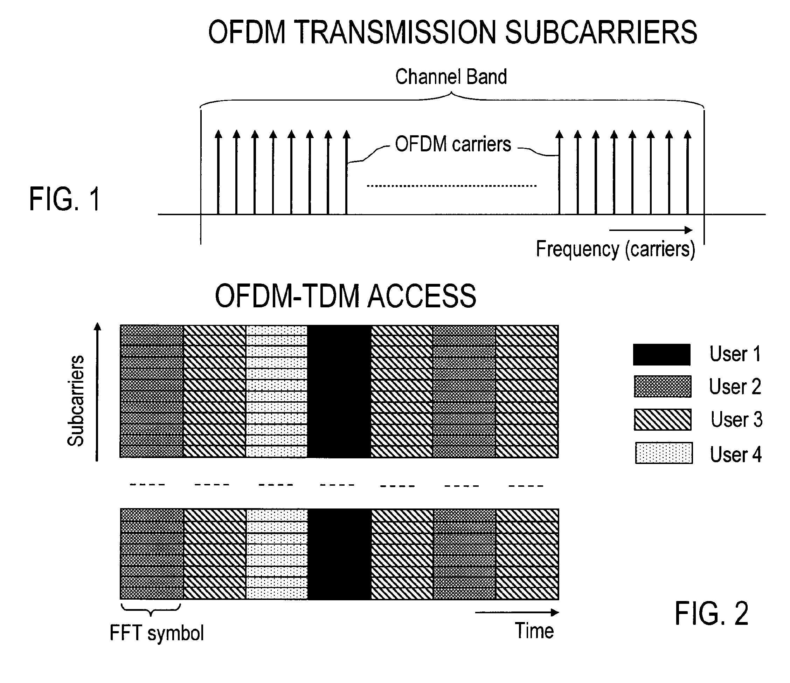

With reference to **figg.1** and **2,** we see that in case of OFDM transmissions the available subcarriers associated to the FFT symbol are assigned to a single user, so multiple access only takes place through Time Division Multiple Access (TDMA) subdividing the time frame in slots assigned to different users.

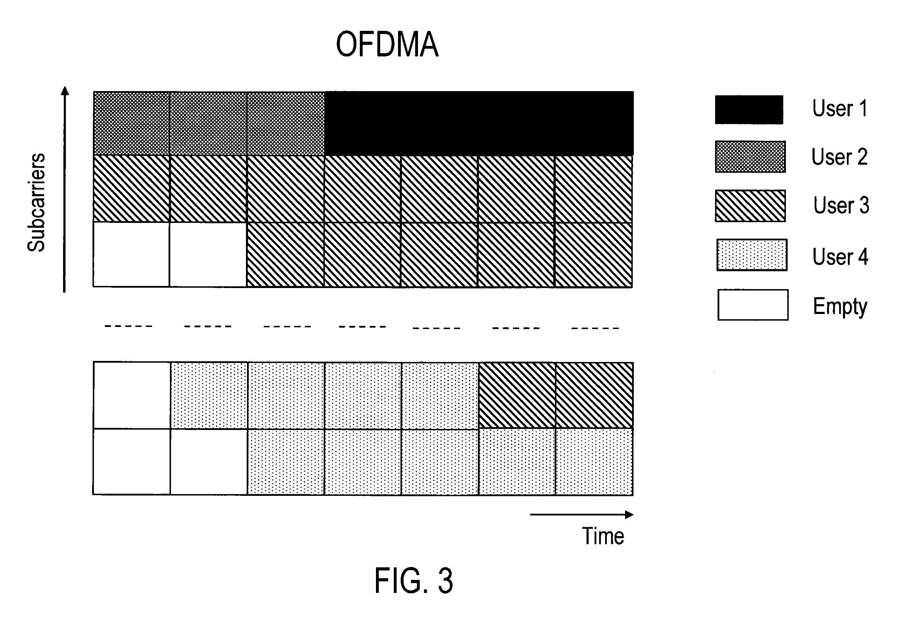

With reference to **fig.3,** we see that in case of OFDMA transmissions the available OFDM subcarriers associated to the single FFT symbol are subdivided into multiple bands allocated to different users. OFDMA with respect to OFDM, has the additional degree of freedom of allowing multiple subchannels transmitted simultaneously. The present invention only refers to the OFDMA technique.

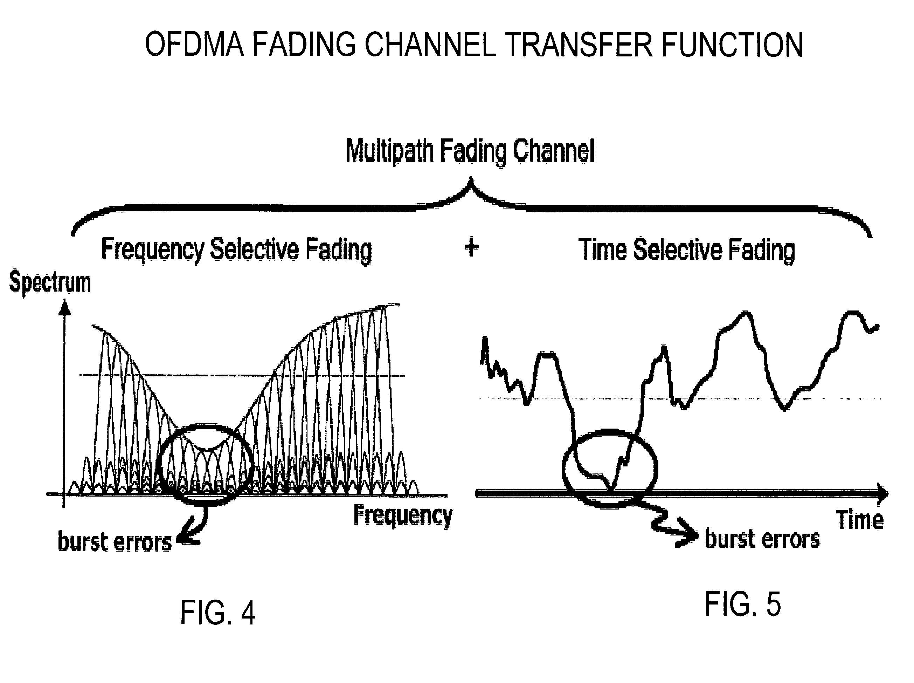

Due to multipath fading, the quality of the wireless link in term of Signal to Noise plus Interference Ratio (SINR) in a wideband system is subject to wide fluctuations over the OFDM symbol bandwidth. This behavior is well visible in the multipath fading channel curves depicted in **fig.4** and **fig.5** for frequency selective and time selective fading, respectively. Furthermore, in an OFDMA system the fluctuations of the quality of the link in the frequency domain are higher than in OFDM-TDMA systems, as the effect of frequency-dependent interference. The SINR fluctuation may be partially counteracted by the use of multiple antennas on the interfering links.

In the following we focus on the downlink of a multiuser OFDMA cellular system, but we stress that the same analysis holds also for the uplink. The SINR on the n-th subcarrier is given by:

$$SINR_n = \frac{S_n}{I_n + \sigma^2} \qquad (1)$$

where $s_n$ is the power of the signal received by the station of the mobile user (MSS) from the base station (BS), $I_n$ is the power of the interference generated e.g., from the other BSs, and $\sigma^2$ is the power of thermal noise. The term $\sigma^2$ in (1) is deterministic and the term $S_n$, which depends on the user channel quality, can be usually accurately measured (or predicted) by the BS. However, the interference term $I_n$ which depends on the instantaneous scheduling allocations of the other MSSs, is unpredictable, since the scheduling assignment of different BSs are independent to each other. In other words, the term $I_n$ in (1) is a random variable that hampers the performance of the system in an unpredictable way because, in general, $SINR_n \# SINR_m$ for $n \neq m$, being $n$ and $m$ any pair of subcarriers.

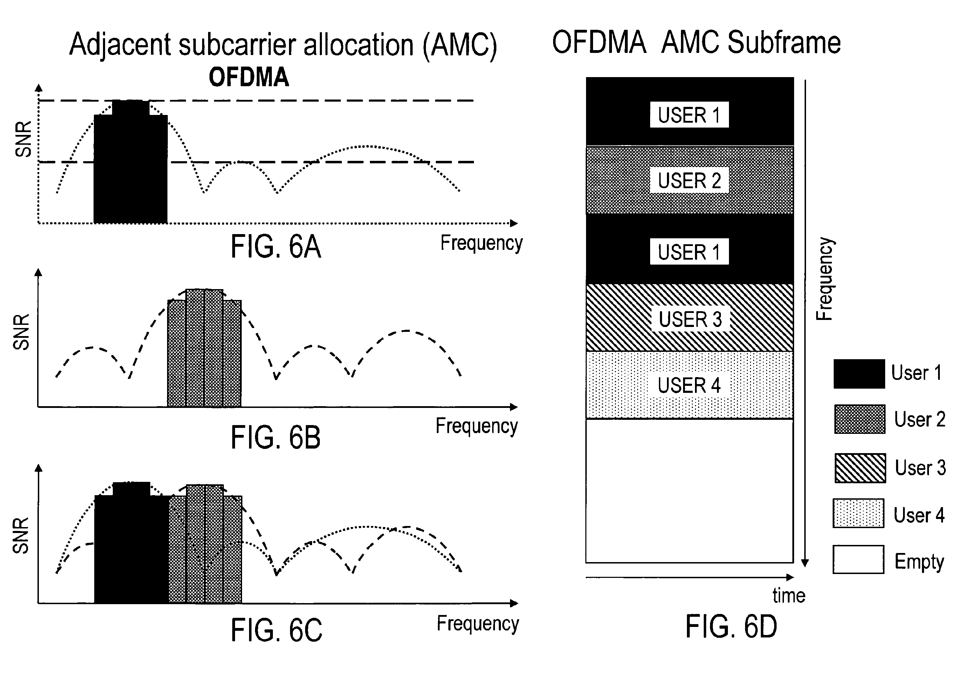

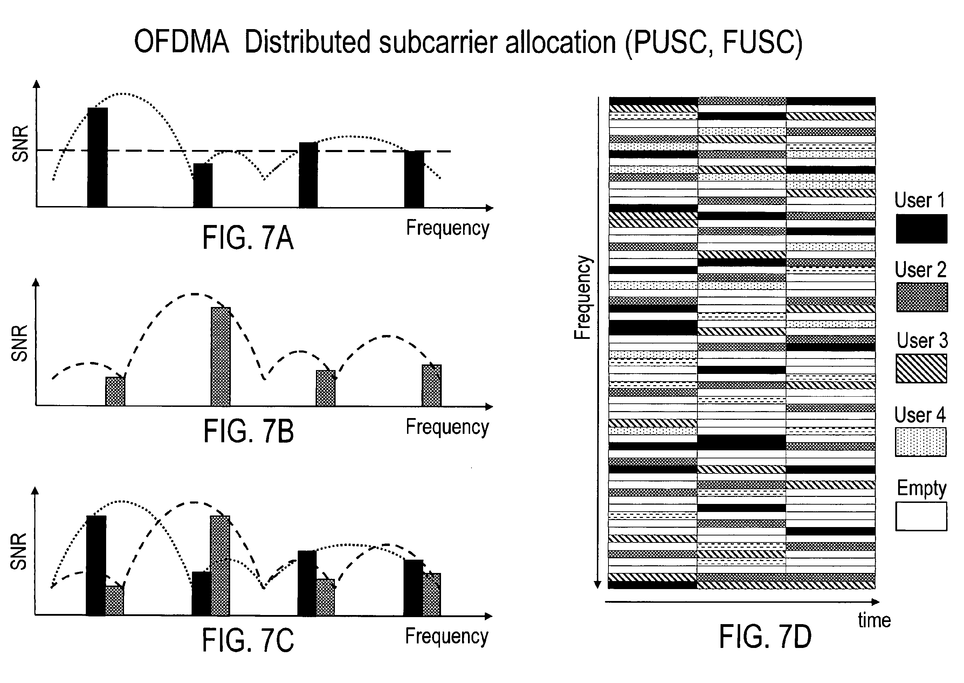

Substantially, two main approaches are known for the allocation of resources in a OFDMA systems: Frequency adaptive allocation, and Frequency non-adaptive allocation. First one is depicted in **figures 6A** to **6D**, the second one in **figures 7A** to **7D**. Similar mapping strategies are also found in other B3G standards, e.g. 3GPP LTE and WINNER.

Making references to **figures 6A** to **6D**, the Frequency adaptive allocation can be performed through Adaptive Modulation and Coding (AMC) described in the IEEE 802.16e, subclause 8.4.6.3, in which the BS maps the resources destined to a certain user on its best subcarriers only, namely, the subcarriers where the BS has measured the largest SINR values in the last frame.

Making references to **figures 7A** to **7D**, in Frequency non-adaptive allocation, e.g. performed through Partial Usage Sub-Channel (PUSC) and Full Usage Sub-Channel (FUSC) modalities also described in the IEEE 802.16e, subclauses 8.4.6.1.2.1 and 8.4.6.1.2.2. The BS, in order to average the effect of multipath and interference, spreads the resources on the OFDM symbol in a pseudo random fashion.

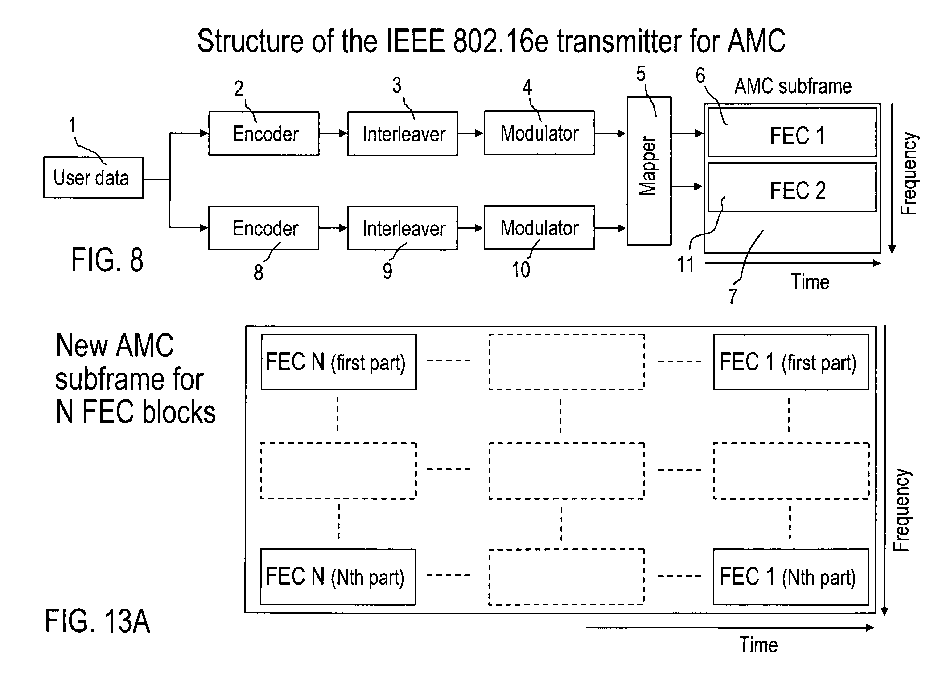

The invention to be described is focused on frequency adaptive allocation, and in particular on the AMC resources allocation strategy. Taking the IEEE 802.16e as exemplary implementation of the OFDMA-AMC technique according to the prior art, the radio frame is divided in 12 bands in the frequency domain and each band comprises several adjacent subcarriers from the OFDM symbol. **Fig.8** shows a schematic realization of a transmitter compliant with IEEE 802.16e, when the user data burst has two bands assigned. With reference to the figure, we see a storing register 1 for memorizing a user data burst spanning the subframe time. The output of register 1 feeds two parallel baseband coding structures. For the sake of simplicity a baseband processor which controls the whole block coding activity is not represented in the figure. The first baseband structure is constituted by the cascade of the elements: Encoder 2, Interleaver 3, modulator 4, and Mapper 5 (first input). The second baseband structure is constituted by the cascade of the elements: Encoder 8, Interleaver 9, modulator 10, and Mapper 5 (second input). The Mapper has two independent inputs and two independent outputs connected to the two inputs of a RF Transmitter 7.

In the operation, the data burst stored in register 1 is subdivided in two parts (by the control logic of the register) that are conveyed to the input of respective Encoders 2 and 8 to be encoded independently to each other, then interleaved and modulated as specified in the mentioned standard. Mapper 5 receives at its two inputs two configurations of modulation symbols from two independent block codes, and maps them onto two groups of adjacent subcarriers belonging to two respective bands chosen by the Base Station. Time signals of the two bands simultaneously available at the two output of the Mapper 5 are issued to the RF transmitter 7 to be converted at RF and irradiated from the antenna. Up to 4 bands (typically) can be assigned to the same user in a given frame. For each band, the best supported Modulation and Coding Scheme (MCS) is selected by the Base Station, according to the SINR values that were measured in the previous frame for that band. As described in IEEE 802.16e, clause 8.4.9, block coding is of the Forward Error Correction (FEC) type, such as an outer Solomon coding chained to an inner Convolutional Coding (CC) with different selectable Rates, while possible modulations of FEC blocks are: QPSK, 16-QAM, and 64-QAM. Pilot sequences on the pilot carriers undergo more robust MCSs. In conclusion, the diagram of **fig.8** shows that block coding of the known art is performed independently for each band, and each FEC block are not allowed to span across different bands. It is obvious that at the receiving side the receiver behaves dually to reconstruct the transmitted data burst.

## OUTLINED TECHNICAL PROBLEM

An unavoidable problem of frequency adaptive allocation is that the SINR experienced on a given band in a given frame may be significantly different from its expected value, based on measurements in the previous frame. This is because of unpredictable changes in the interference term $I_n$ in the expression (1). Unfortunately, mapping single FEC blocks on independent bands is a strategy unable to contrast fade in the power signal due to the unpredictable interference, so high probability of packet loss can be experienced in the likely event that the experienced SINR falls below the expected value based on the measurements in the previous frame.

**OBJECT AND SUMMARY OF THE INVENTION**

Object of the present invention is that to overcome the defects of the OFDMA-AMC FEC block allocation modality of the prior art.

The invention achieves said object by providing a method for allocating in a wireless communication network user codewords scheduled for the transmission subframe on respective bands of adjacent OFDMA subcarriers, as disclosed in the relevant claims.

Other object of the invention is a transmitter operating according to the method that will be described, as disclosed in the relevant claims. The transmitter can be used in the base station or the subscriber station, either fixed or mobile, of a wireless communication system based on OFDMA.

According to the method of the invention, the following steps are sequentially executed at the transmitting side indifferently of the base station or said subscriber station, being the subscriber station:

- encoding into a single FEC block of assigned length a transmission data burst of a user scheduled on N bands;
- subdividing the single FEC block into N FECn sequential sub-blocks after having added padding bits if necessary;
- further subdividing each FECn$^{th}$ sub-block into N parallel fractional sub-blocks after having added padding bits if necessary;
- for each FECn$^{th}$ sub-block of the sequence from 1 to N, mapping in biunique association the N fractional sub-blocks of the FECn$^{th}$ sub-block onto the N scheduled bands transmitted during the fractional sub-block time.

FEC blocks of other possible users scheduled on one only respective band in that subframe are transmitted as usual.

The one listed above constitute the minimum set of steps for implementing the method of the invention. In addition, various interleaving and puncturing schemes may be executed on the FEC block for achieving best receiving performances, while modulation is an implicit transmission task that can be accomplished according to various possible schemes.

Along the baseband processing chain the first subdivision of the initial FEC block may be accomplished according to different variants of the inventions, described in respective dependent claims.

Exactly dual operations are performed at the receiving side, either of the base station or the subscriber station, either fixed or mobile, for reconstructing the transmitted data burst.

The proposed allocation scheme is applicable even when the scheduler assigns different MCSs to the different AMC bands. The invention provides higher spectral efficiency to the system in respect of coding each band in an independent way, because it improves the robustness of the codewords (i.e. the FEC blocks) during worst-case events. In other words, frequency diversity has been added where it was not existing at all, achieving the opportunistic maximization of the user power $S_n$ and the averaging (through diversity) of the interference power $I_n$ at the same time, lowering in the average the Slot Error Rate (SLER), while standard compliant AMC and PUSC allocations are unable to achieve this result.

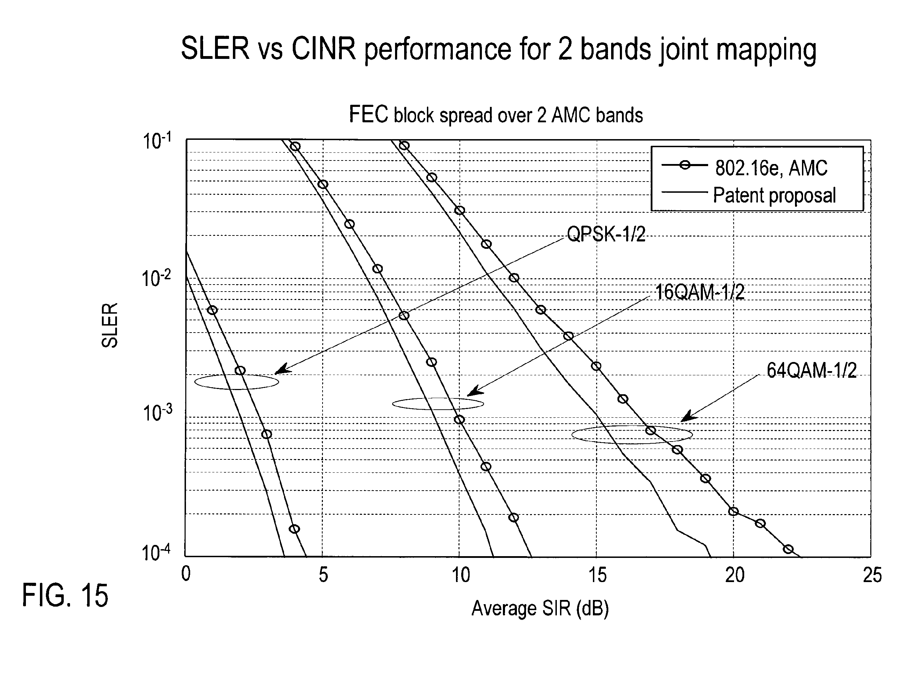

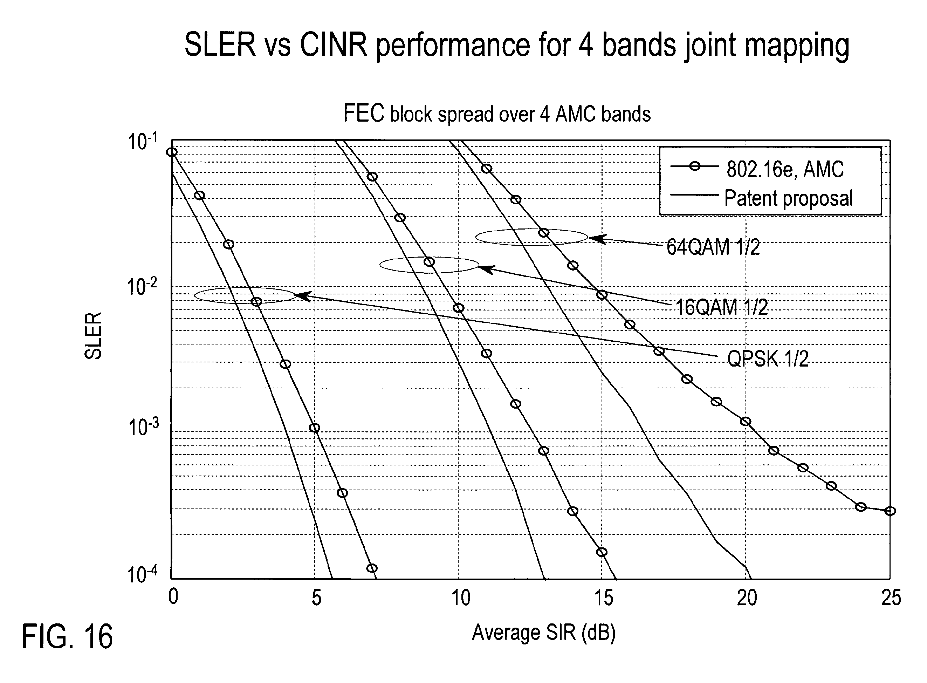

The analytical proof of the convenience of the proposed technique, besides to be cumbersome, is not strictly necessary to prove the advantages achievable by the invention, which are clear from some comparative curves reported in **figures 15** and **16.**

Profitably, the proposed solution does not affect scheduling gain, as it is performed after the scheduling decision and does not alter the scheduler assignments.

A possible use of the invention with future releases of IEEE 802.16e specifications should be preferable, for this aim the teaching of the invention will be proposed to the next WiMAX Forum.

**BRIEF DESCRIPTION OF THE DRAWINGS**

The invention and its advantages may be understood with reference to the following detailed description of an embodiment thereof taken in conjunction with the accompanying drawings given for purely non-limiting explanatory purposes and wherein:

- **fig.1** shows the frequency spectrum of WiMAX channel band with spaced OFDM subcarriers;
- **fig.2** shows a frequency-time diagram of the OFDM-TDM access mode;
- **fig.3** shows a frequency-time diagram for the OFDMA technique;
- **fig.4** shows a typical frequency-selective curve of the signal amplitude vs. frequency for a multipath fading channel;
- **fig.5** shows a typical fast-time-varying curve of the signal amplitude vs. time for the same multipath fading channel;
- **figures 6A, 6B, 6C** show respective SNR vs. frequency curves superimposed to histograms of adjacent allocated subcarriers for two only users, according to the OFDMA AMC strategy;

- **fig.6D** shows an OFDMA subframe structure for allocating adjacent subcarrier resources to four users according to the AMC strategy;
- **figures 7A, 7B, 7C** show respective SNR vs. frequency curves superimposed to histograms of distributed allocated subcarriers for two only users, according to the OFDMA random (PUSC, FUSC) strategy;
- **fig.7D** shows the OFDMA frame structure for allocating distributed subcarrier resources to four users according to the random (PUSC, FUSC) strategy;
- **fig.8** shows the diagram of a transmitter operating according to the IEEE 802.16e standard when two OFDMA AMC bands are assigned to the same user;
- **fig.9** shows an exemplary network model of a communication system, for example the IEEE 802.16e reference model, useful for implementing the present invention;
- **fig.10** shows the Control Plane Network Model relevant to the system of fig.9;
- **fig.11** shows the protocol stack active at the interfaces of a BS element indicated in fig.10;
- **fig.12** shows a typical OFDMA TDD (Time Division Duplexing) frame structure according to the IEEE 802.16e reference model;
- **fig.13** shows the diagram of the most general structure of a transmitter operating according to the method of the present invention when two OFDMA AMC bands are assigned to the same user;
- **fig.13A** shows the structure of the new AMC subframe of fig.13 when N OFDMA AMC bands are assigned to the same user;
- **figures 13B** to **13F** show five possible implementation variants of a baseband Processing Unit visible in fig.13;
- **fig.14** shows the diagram of the most general structure of a receiver which accomplishes dual operation;
- **fig.15** shows comparative simulation curves of SLER (Slot Error Rate) vs. CINR (Carrier to Interference plus Noise Ratio) achievable at the output of a receiver when data are transmitted by the conventional transmitter of fig.8 and the proposed one of fig.13, for different MCS and two allocated bands;
- **fig.16** shows similar curves to those of fig.15 but referred to four allocated bands.

## DETAILED DESCRIPTION OF AN EMBODIMENT OF THE INVENTION

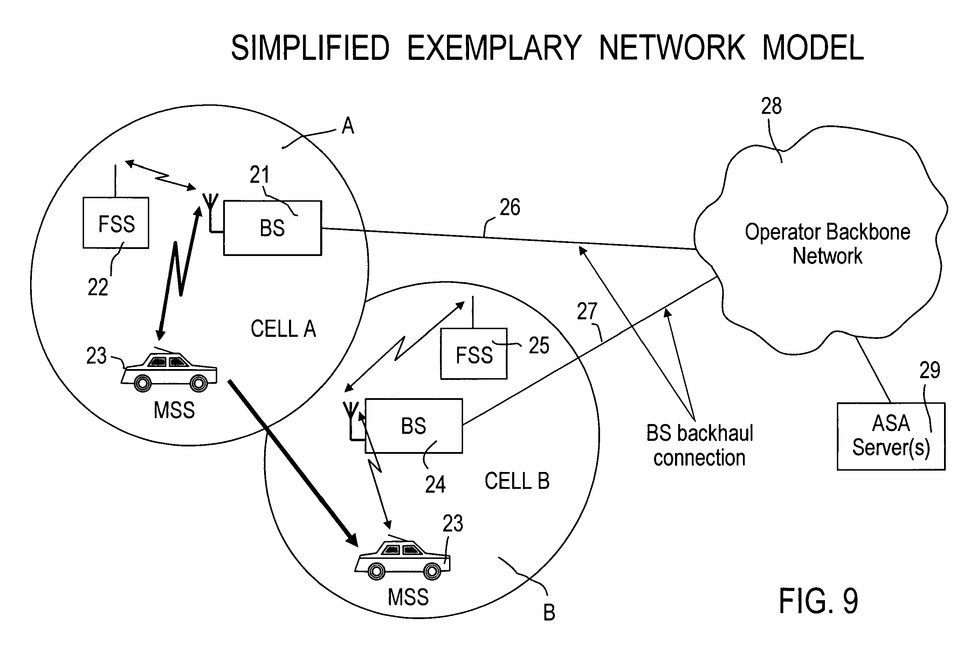

In **fig.9** a simplified exemplary network model useful to implement the present invention is represented. Without limitation, the model is also referable to the IEEE 802.16 specifications up to the last version at the filing date. With reference to **fig.9** we see a first and a second partially overlapping cells A and B. The first one (A) includes a Base Station 21 that provides communication services on the radio channel to both mobile subscriber users (MSS) like a 23 one and fixed subscriber users (FSS) like a 22 one. The second cell (B) includes a Base Station 24 that provides communication services on the radio channel to fixed subscriber users like the 22 one, and mobile subscriber users, like the same 23 one after its handover is completed. In their turn the BS 21 and 22 are connected to the Operator specific Backbone Network 28 through respective BS backhaul connections 26 and 27. One or more AAA (Authorization, Authentication and Accounting) Servers 29 are connected to the backbone 28.

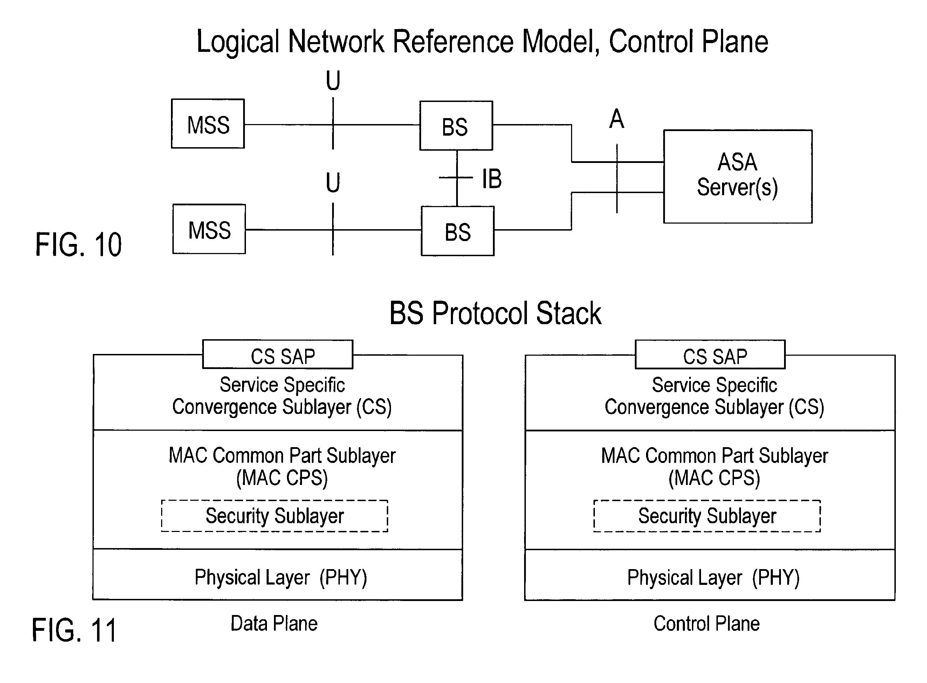

**Fig.10** shows the control plane logical network reference model underneath the network model **of fig.9.** With reference to **fig.10** the following Reference Pont are pointed out at the various interfaces: U. IB. and A. Point U accounts for implementing procedures at Physical (PHY) layer and Medium Access Control (MAC) including message exchange for mobility support. Point IB accounts for BS-to-BS messages. Point A accounts for messages serving MSS authentication and service authorization functions.

**Fig.11** shows the protocol stacks at the BS interfaces for both Data Plane and Control Plane. The two stacks are identical. The following bottom-up levels are present in the stacks of **fig.11:** PHY layer; MAC Common Part Sublayer (CPS) including Security Sublayer; Service Specific Convergence Sublayer (CS). At the top of the two stacks a respective CS SAP (Service Access Point) is provided.

More in particular, WiMAX Forum, based on IEEE 802.16 specifications, assign to Radio Resource Management (RRM) the tasks of measurement, exchange, and control of radio resource-related indicators (e.g., current subchannel allocations to service flows) in the wireless network. RRM related signalling is realized by means of two functional entities within RRM: the Radio Resource Control (RRC) functional entity and Radio Resource Agent (RRA) functional entity. As expressly indicated in the WiMAX Stage 2 specification, the control function primarily refers to decisions made by a measuring station or remote entity to adjust (i.e., allocate, reallocate or de-allocate) radio resources based on the reported measurements and other information, or by using proprietary algorithms, and communicating such adjustments to network entities using standardized primitives. Such control may be local and remote from the measuring station.

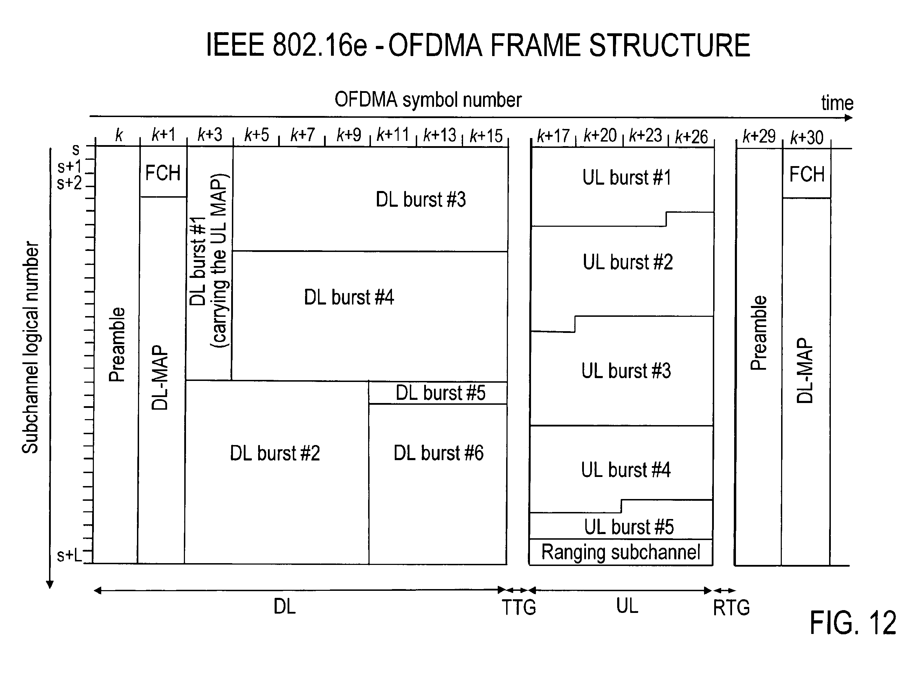

**Fig.12** depicts the OFDMA TDD frame structure according to IEEE 802.16e specifications, that it is easily adaptable for obtaining the band allocation according to the strategy of the present invention that will be described soon. The TDD frame includes a DL subframe and a subsequent UL subframe. The representation in figure (well detailed in the specification) shows the various bursts allocated on the plane delimited by the frequency and time axes, of which: the horizontal time axis is subdivided by symbol numbers, while the perpendicular frequency axis is subdivided by subchannel numbers. A subchannel is formed by contiguous permutation of subcarriers grouped into a block (not to be confused with a block code). The contiguous permutations include Downlink (DL) AMC and Uplink (UL) AMC, and have the same structure. A bin consists of 9 contiguous subcarriers in a symbol, with 8 assigned for data and one assigned for pilot. A slot in AMC is defined as a collection of bins of the type (N x M = 6), where N is the number of contiguous bins and M is the number of contiguous symbols. Thus the allowed combinations are: (6 bins, 1 symbol), (3 bins, 2 symbols), (2 bins, 3 symbols), (1 bin, 6 symbols). AMC permutation enables multi-user diversity by choosing the subchannel with the best frequency response.

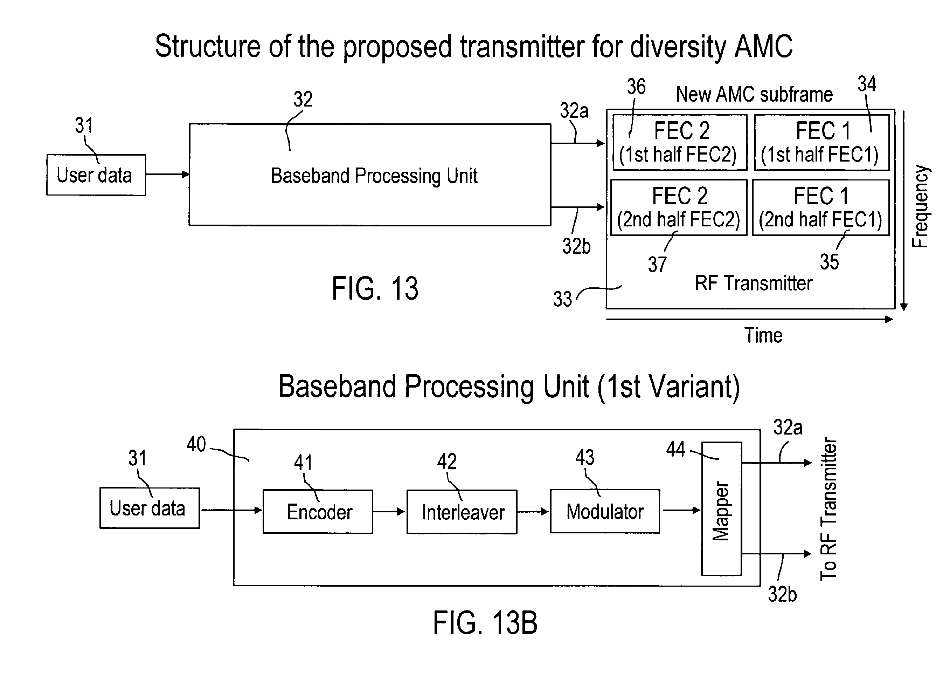

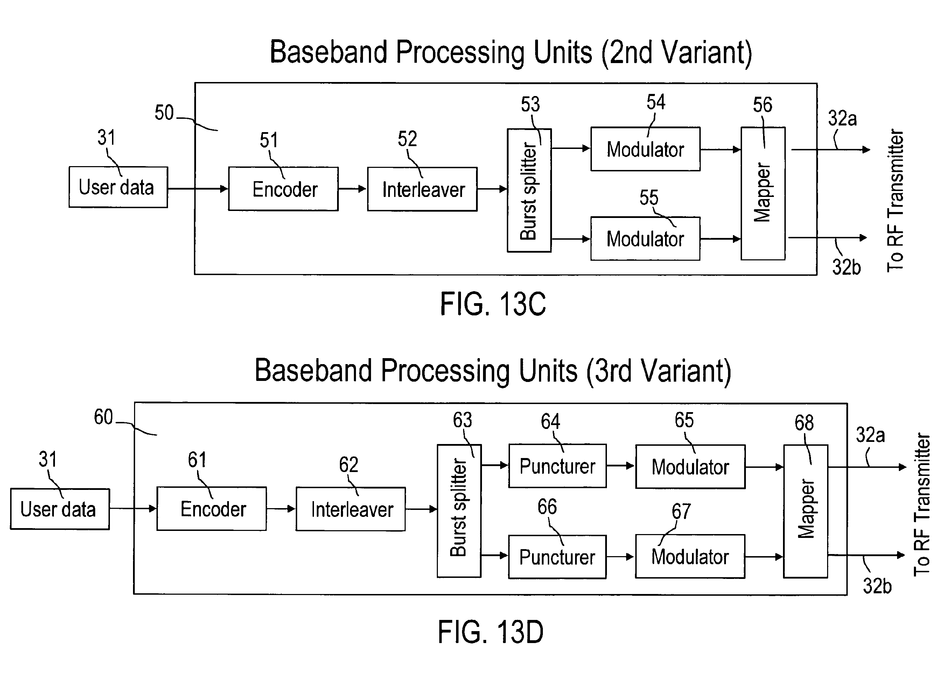

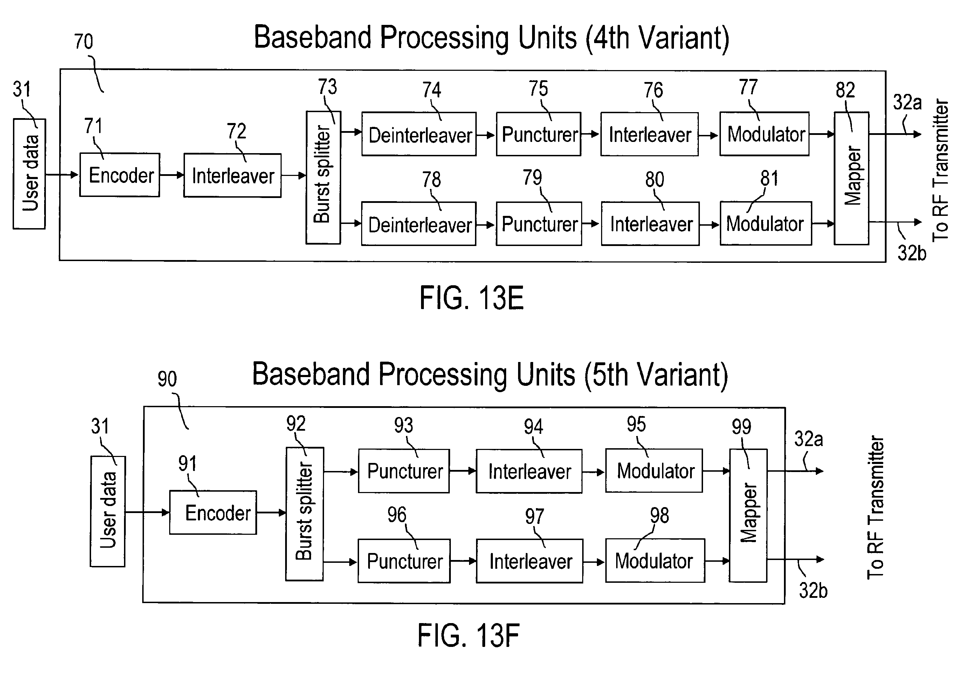

**Fig.13** shows a schematic realization of a transmitter according to the present invention when two bands of adjacent OFDMA subcarriers are scheduled to a same user in a transmission subframe. The transmitter in figure is the one located either at the base station or the subscriber station, indifferently, being the subscriber station either fixed or mobile. With reference to **fig.13**, we see a storing register 31 for memorizing a user data burst spanning the subframe time. The output of register 31 feeds the input of a Baseband Processing Unit 32 that has two outputs 32a and 32b connected to two inputs of an RF transmitter 33. The implementation of processor 32 will be illustrated in the successive figures **13B to 13E** according to four variants of the invention. In the whole considered variants the data burst entering the Unit 32 is encoded as a whole FEC block, then interleaved and split up in two other FEC blocks FEC 1 and FEC 2. In their turn each one of FEC 1 and FEC 2 blocks are split up in two halves, respectively labelled as: 34 and 35 for FEC1 and 36 and 37 for FEC2. The two half block codes 34 and 35 of FEC1 (long a quarter of the initial FEC block) are simultaneously outputted at the outputs 32a and 32b lasting the first half FEC block time on the two scheduled bands. The two half block codes 36 and 37 of FEC2 are simultaneously outputted at the two outputs 32a and 32b lasting the second FEC block time on the same respective bands.

The above two bands implementation is not a limitation for the invention because, with reference to **fig.13A**, compatibly with the maximum number Nmax of bands permitted in a subframe, up to $N \leq Nmax$ bands can be assigned to a same user. Presently, in IEEE 812.16e is Nmax = 12 and N = 4. For each band the best supported Modulation and Coding Scheme (MCS) is selected by the Base Station according to the SINR values that were measured in the previous frame for those bands. The allocation strategy disclosed for two only bands is immediately extendible to N bands executing the following sequential steps at the transmitting side:

- encoding a transmission data burst into a single FEC block of assigned length;
- subdividing the single FEC block into a number to $N \leq Nmax$ of FECn sub-blocks after having added pad bits if necessary;
- further subdividing each FECn$^{th}$ sub-block into N fractional sub-blocks after having added pad bits if necessary;
- for each FECn$^{th}$ sub-block of the sequence from 1 to N, mapping in biunique association the N fractional sub-blocks of the FECn$^{th}$ sub-block onto the N scheduled bands transmitted during the fractional sub-block time.

It is immediate realizing that the length of the initial FEC block is not changed by the proposed mapping of said block on more than one band.

According to **fig.13B** referred to the first variant of the invention, a Baseband Processing Unit 40 includes the following cascaded elements: Encoder 41, Interleaver 42, modulator 43, and Mapper 44. The elements 41, 42, and 43 operates according to known procedures, e.g. as described in relevant clauses of the cited IEEE 802.16e standard, for obtaining a FEC encoded, interleaved, and modulated block at the input of Mapper 44. The latter splits up the received FEC block according to previously said for Unit 32 of **fig.13**. The first variant accounts for N fractional sub-blocks (e.g. 34, 35 and 36, 37 for N = 2) with an unique Modulation and Coding Scheme (MCS) for the whole allocation bands.

According to **fig.13C** referred to the second variant of the invention, a Baseband Processing Unit 50 includes: an Encoder 51 with a cascaded Interleaver 52, followed by a two-output Burst splitter 53. Two Modulators 54 and 55 are connected to respective outputs of burst splitter 53. The output signal of each modulator 54 and 55 reaches a respective input of a Mapper 56, which provides two baseband signals directed to the RF Transmitter 33 (fig.13) at its two outputs 32a and 32b. The extension to N FEC sub-blocks each one with N fractional sub-blocks requests a Burst splitter 53 with N outputs connected to N Modulators; plus a Mapper 56 with N inputs and N outputs. Differently from the first variant of **fig.13B,** the Burst splitter 53 instead of Mapper is now the one which provides subdivision of the initial FEC block in N FEC sequential sub-blocks, each one with N parallel fractional sub-blocks, while Mapper 56 only provides to the band allocation. The second variant accounts for N fractional sub-blocks (e.g. 34, 35, and 36, 37 for N = 2) with an unique Coding Scheme and different Modulations on the allocation bands. To reach this aim the Modulators 54 and 55 impress different modulation schemes on the relevant punctured fractional sub-blocks.

According to **fig.13D** referred to the third variant of the invention, a Baseband Processing Unit 60 includes: Encoder 61 with cascaded an interleaver 62 and a Burst splitter 63 having two outputs. The interleaved code word at the first output feeds the cascade of a Puncturer unit 64 and a Modulator 65. The interleaved code word at the second output feeds the cascade of a Puncturer unit 66 and a Modulator 67. The output signal of each modulator 65 and 67 reaches a respective input of a Mapper 68 that provides two baseband signals directed to the RF Transmitter 33 (fig.

13) at its two outputs 32a and 32b. The extension to N FEC sub-blocks, each one with N fractional sub-blocks, requests a Burst splitter 63 with N outputs connected to N cascades of Puncturer and Modulator; plus a Mapper 68 with N inputs and N outputs. The Burst splitter 63 behaves as the corresponding one of **fig.13C** and Mapper 68 only provides to the band allocation. The third variant accounts for N fractional sub-blocks (e.g. 34, 35 and 36, 37 for N = 2) with different MCS on the allocation bands. To reach this aim the Puncturer units 64 and 66 use different perforation patterns on the relevant fractional sub-block, and the Modulators 65 and 67 impress different modulation schemes on the relevant punctured fractional sub-blocks.

According to **fig.13E** referred to the fourth variant of the invention, a Baseband Processing Unit 70 includes: Encoder 71 with cascaded an interleaver 72 and a Burst splitter 73 having two outputs. The interleaved code word at the first output feeds the cascade of a Deinterleaver 74, a Puncturer unit 75, an interleaver 76, and a Modulator 77. The interleaved code word at the second output feeds the cascade of a Deinterleaver 78, a Puncturer unit 79, an interleaver 80, and a Modulator 81. The output signal of each modulator 77 and 81 reaches a respective input of a Mapper 82 that provides two baseband signals directed to the RF Transmitter 33 (fig.13) at its two outputs 32a and 32b. The extension to N FEC sub-blocks, each one with N fractional sub-blocks, requests a Burst splitter 73 with N outputs connected to N cascades of Deinterleaver, Puncturer, interleaver, and Modulator; plus a Mapper 82 with N inputs and N outputs. The Burst splitter 73 behaves as the corresponding one of **fig.13D** and Mapper 82 only provides to the band allocation. The fourth variant accounts for N fractional sub-blocks (e.g. 34, 35 and 36, 37 for N = 2) with different MCS on the allocation bands. To reach this aim the Puncturer units 64 and 66 use different perforation patterns on the relevant fractional sub-blocks, and the Modulators 77 and 81 impress different modulation schemes on the relevant punctured and interleaved fractional sub-blocks.

According to **fig.13F** referred to the fifth variant of the invention, a Baseband Processing Unit 90 includes: Encoder 91 with cascaded a Burst splitter 92 having two outputs. The code word at the first output feeds the cascade of a Puncturer unit 93, an interleaver 94, and a Modulator 95. The interleaved code word at the second output feeds the cascade of a Puncturer unit 96, an interleaver 97, and a Modulator 98. The output signal of each modulator 95 and 98 reaches a respective input of a Mapper 99 that provides two baseband signals directed to the RF Transmitter 33 (fig. 13) at its two outputs 32a and 32b. The extension to N FEC sub-blocks, each one with N fractional sub-blocks, requests a Burst splitter 92 with N outputs connected to N cascades of Puncturer, Interleaver, and Modulator; plus a Mapper 99 with N inputs and N outputs. The Mapper 99 only provides to the band allocation. The fifth variant accounts for N fractional sub-blocks (e.g. 34, 35 and 36, 37 for N = 2) with different MCS on the allocation bands. To reach this aim the Puncturer units 93 and 96 use different perforation patterns on the relevant fractional sub-blocks, and the Modulators 95 and 98 impress different modulation schemes on the relevant punctured fractional sub-blocks.

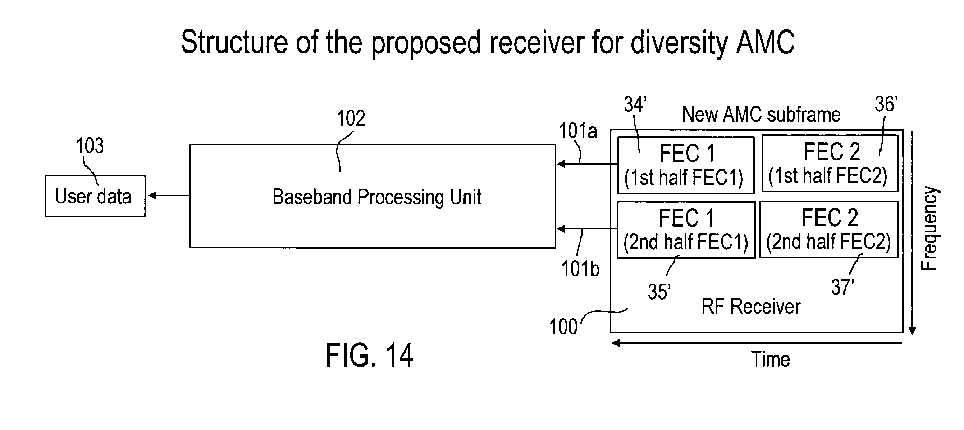

**Fig.14** shows the general structure of a receiver for diversity AMC dual to the transmitter of **fig.13.** The receiver in figure is the one located at the base station or the subscriber station, indifferently, the latter being either fixed or mobile. With reference to **fig.14,** we see a RF Receiver 100 with two baseband outputs 101a and 101b for two signals allocated on two bands according to the strategy described for the transmission side, and now depicted for the received FEC sub-blocks 34', 35' of FEC 1 and 36', 37' of FEC 2. The two signals at the outputs 101 a and 101b enter a Baseband Processing Unit 102 to be: demapped, demodulated, deinterleaved, and decoded for obtaining at the output register 103 the likely transmitted burst. The extension to N bands is immediate. Dual operations are exactly performed by a receiver whose design is in the capability of the skilled man on the basis of the above description of the operation performed at the transmission side, so a detailed description should be unneeded.

Comparative performance curves of the receiver of **fig.14** for two diversity allocations strategies are reported in the next **figures 15** and **16.** In the following the slot error rate (SLER) vs. $SIR = E[S_n / I_n]$ of the proposed technique is compared with that of the current AMC solution, by numerical simulation. The simulation is performed assuming realistic cell-edge parameters, i.e. $SNR = E[s_n] / \sigma^2] = 20 dB,$ and two dominant (equal power) interferers.

In **fig.15** we assume that the BS assigns the same MCS to the best two bands over the 12 available bands of the OFDM symbol. For convenience, only QPSK-1/2, 16QAM-1/2 and 64QAM-1/2 with convolutional codes are evaluated. For a typical real time application, e.g. Voice over IP (VoIP), a target $sLER = 10^{-3}$ is considered. The gain provided by the proposed solution ranges from 1dB for QPSK-1/2 to 2dB for 64QAM-1/2).

In **fig.16** we assume that the BS assigns the same MCS to the best four bands over the 12 available bands of the OFDM symbol. For a target $SLER = 10^{-3},$ the gain provided by the proposed solution ranges from 1dB for QPSK-1/2 to more than 3dB for 64QAM-1/2.

Although the invention has been described with particular reference to some preferred embodiments, it will be evident to those skilled in the art, that the present invention is not limited thereto, but further variations and modifications may be applied without departing from the scope of the invention as defined by the annexed claims.

**Claims**

1. Method for allocating in a wireless communication network based on Orthogonal Frequency Division Multiple Access technique, called hereafter OFDMA, forward error correction user block codes of assigned length, called hereafter FEC blocks, scheduled by a base station (21, 24) in a transmission subframe on frequency bands of adjacent subcarriers, **characterized in that** includes the following sequential steps performed at the transmitting side indifferently of the base station or the subscriber stations either fixed ((22, 25) or mobiles (23):

   a) encoding (32) into a single FEC block a transmission data burst of a user scheduled on N bands;
   b) subdividing (32) the single FEC block into N FECn sequential sub-blocks (FEC1, FEC2) after having added padding bits if necessary;
   c) further subdividing (32) each FECn[th] sub-block (FEC1, FEC2) into N parallel fractional sub-blocks (34-35, 36-37) after having added padding bits if necessary;
   d) for each FECn[th] sub-block of the sequence from 1 to N (FEC1, FEC2), mapping (32) in biunique association the N fractional sub-blocks (34, 35; 36, 37) of the FECn[th] sub-block onto the N scheduled bands transmitted during the fractional sub-block time.

2. The method of claim 1, **characterized in that**:

   - after the encoding (41) step a) includes an interleaving step (42) of FEC block;
   - before the subdivision (44) step b) includes a modulation step (43) according to an assigned modulation scheme.

3. The method of claim 1, **characterized in that**:

   - after the encoding step a) includes an interleaving step (52) of FEC block; and
   - after the subdivision step c) includes a plural modulation step (54, 55) of each fractional sub-block according to a respectively assigned modulation scheme.

4. The method of claim 1, **characterized in that**:

   - after the encoding step a) includes an interleaving step (62) of FEC block;
   - after the subdivision step c) includes in sequence:

     - a plural puncturing step (64, 66) of each fractional sub-block according to a respectively assigned code perforation pattern;
     - a plural modulation step (65, 67) of each punctured fractional sub-block according to a respectively assigned modulation scheme.

5. The method of claim 1, **characterized in that**:

   - after the encoding step a) includes an interleaving step (72) of FEC block;
   - after the subdivision step c) includes in sequence:

     - a plural deinterleaving step (74, 78) of each fractional sub-block;
     - a plural puncturing step (75, 79) of each deinterleaved fractional sub-block according to a respectively assigned code perforation pattern;
     - a plural interleaving step (76, 80) of each punctured fractional sub-block;
     - a plural modulation step (77, 81) of each interleaved fractional sub-block according to a respectively assigned modulation scheme.

6. The method of claim 1, **characterized in that**:

   - after the subdivision step c) includes in sequence:

     - a plural puncturing step (93, 96) of each fractional sub-block according to a respectively assigned code perforation pattern;
     - a plural interleaving step (94, 97) of each punctured fractional sub-block;
     - a plural modulation step (95, 98) of each interleaved fractional sub-block according to a respectively assigned modulation scheme.

7. The method of any claim from 1 to 6, **characterized in that** further includes dual steps performed at the reception side of the subscriber station (22, 23, 25) or the base station (21, 24), indifferently.

8. A transmitter for a wireless communication system based on Orthogonal Frequency Division Multiple Access technique, called hereafter OFDMA, the transmitter including:

- encoding means (32) of transmission data bursts configured for obtaining forward error correction user blocks of assigned length, called hereafter FEC blocks;
- modulation means (32) of said FEC blocks according to an assigned modulation scheme;
- means for mapping said FEC blocks onto N frequency bands of adjacent subcarriers according to a given plane,

**characterized in that**:

- the encoding means (32) are configured for encoding into a single FEC block a transmission data burst of a user scheduled on N bands;
- splitting means (32) are included downward the encoding means, and said splitting means are configured so as to:

- pad and subdivide the single FEC block into N sequential FECn sub-blocks (FEC1, FEC2);
- further pad and subdivide each FECn$^{th}$ sub-block into N parallel fractional sub-blocks (34, 35, 36, 37);

- the mapping means (32) are configured for mapping in biunique association the N fractional sub-blocks of the FECn$^{th}$ sub-block onto the N scheduled bands transmitted during the fractional sub-block time.

9. The transmitter of claim 8, **characterized in that** further includes:

- interleaving means (42) cascaded to said encoding means (40).

10. The transmitter of claim 8, **characterized in that** further includes:

- interleaving means (52) cascaded to said encoding means (51); and
- individual modulation means (54, 55) cascaded to each output of said splitting means (53) each controlled to provide an its modulation scheme.

11. The transmitter of claim 8, **characterized in that** further includes:

- interleaving means (62) cascaded to said encoding means (61);
- individual puncturing means (64, 66) cascaded to each output of said splitting means (63) each controlled to provide an its own code perforation pattern;
- individual modulation means (65, 67) cascaded to each puncturing means (64, 66) each controlled to provide an its own modulation scheme.

12. The transmitter of claim 8, **characterized in that** further includes:

- interleaving means (72) cascaded to said encoding means (71);
- individual deinterleaving means (74, 78) cascaded to each output of said splitting means (73);
- individual puncturing means (75, 79) cascaded to each deinterleaving means (74, 78) each controlled to provide an its own code perforation pattern;
- individual interleaving means (76, 80) cascaded to each puncturing means (75, 79);
- individual modulation means (77, 81) cascaded to each interleaving means (76, 80) each controlled to provide an its own modulation scheme.

13. The transmitter of claim 8, **characterized in that** further includes:

- individual puncturing means (93, 96) cascaded to each output of said splitting means (92) each controlled to provide an its own code perforation pattern;

- individual interleaving means (94, 97) cascaded to each puncturing means (93, 96);
- individual modulation means (95, 98) cascaded to each interleaving means (94, 98) each controlled to provide an its own modulation scheme.

14. The transmitter of any claim from 8 to 13, **characterized in that** it belongs to the base station.

15. The transmitter of any claim from 8 to 13, **characterized in that** it belongs to the subscriber station either fixed or mobile.

# OFDM TRANSMISSION SUBCARRIERS

FIG. 1

# OFDM-TDM ACCESS

FIG. 2

EP 2 001 183 A1

# OFDMA

Subcarriers

| | | | | User 1 |
| --- | --- | --- | --- |
| | | | | User 2 |
| | | | | User 3 |
| | | | | User 4 |
| | | | | Empty |

Time

FIG. 3

# OFDMA FADING CHANNEL TRANSFER FUNCTION

FIG. 4

FIG. 5

# Adjacent subcarrier allocation (AMC)

**OFDMA**

FIG. 6A

FIG. 6B

FIG. 6C

# OFDMA AMC Subframe

| | |
|---|---|
| ■ | User 1 |
| ▨ | User 2 |
| ▨ | User 3 |
| ▨ | User 4 |
| □ | Empty |

FIG. 6D

EP 2 001 183 A1

# OFDMA  Distributed subcarrier allocation (PUSC, FUSC)

FIG. 7A

FIG. 7B

FIG. 7C

FIG. 7D

User 1

User 2

User 3

User 4

Empty

EP 2 001 183 A1

# Structure of the IEEE 802.16e transmitter for AMC

FIG. 8

New AMC subframe for N FEC blocks

FIG. 13A

EP 2 001 183 A1

# SIMPLIFIED EXEMPLARY NETWORK MODEL

FIG. 9

EP 2 001 183 A1

## Logical Network Reference Model, Control Plane

FIG. 10

U

| MSS | BS |

U

| MSS | BS |

IB

A

ASA Server(s)

## BS Protocol Stack

FIG. 11

**Data Plane**

| CS SAP |
|---|
| Service Specific Convergence Sublayer (CS) |
| MAC Common Part Sublayer (MAC CPS) |
| Security Sublayer |
| Physical Layer (PHY) |

**Control Plane**

| CS SAP |
|---|
| Service Specific Convergence Sublayer (CS) |
| MAC Common Part Sublayer (MAC CPS) |
| Security Sublayer |
| Physical Layer (PHY) |

EP 2 001 183 A1

# IEEE 802.16e - OFDMA FRAME STRUCTURE

**FIG. 12**

EP 2 001 183 A1

# Structure of the proposed transmitter for diversity AMC

FIG. 13

New AMC subframe

| FEC 2 (1st half FEC2) | FEC 1 (1st half FEC1) |
| FEC 2 (2nd half FEC2) | FEC 1 (2nd half FEC1) |

RF Transmitter

Frequency

Time

# Baseband Processing Unit (1st Variant)

User data → Encoder → Interleaver → Modulator → Mapper → To RF Transmitter

FIG. 13B

EP 2 001 183 A1

Baseband Processing Units (2nd Variant)

To RF Transmitter

31 User data — 50 — 51 Encoder — 52 Interleaver — 53 Burst splitter — 54 Modulator — 56 Mapper — 32a

55 Modulator — 32b

FIG. 13C

Baseband Processing Units (3rd Variant)

To RF Transmitter

31 User data — 60 — 61 Encoder — 62 Interleaver — 63 Burst splitter — 64 Puncturer — 65 Modulator — 68 Mapper — 32a

66 Puncturer — 67 Modulator — 32b

FIG. 13D

## Baseband Processing Units (4th Variant)

FIG. 13E

## Baseband Processing Units (5th Variant)

FIG. 13F

EP 2 001 183 A1

# Structure of the proposed receiver for diversity AMC

FIG. 14

EP 2 001 183 A1

# SLER vs CINR performance for 2 bands joint mapping

FIG. 15

## SLER vs CINR performance for 4 bands joint mapping

FEC block spread over 4 AMC bands

FIG. 16

EP 2 001 183 A1

**European Patent Office**

## EUROPEAN SEARCH REPORT

Application Number

EP 07 42 5357

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/071496 A1 (EHRMANN FREDERIQUE [FR]) 13 June 2002 (2002-06-13) * claim 7 * | 1-15 | INV. H04L27/26 H04L5/02 H04L1/00 |
| A | FUJII T ET AL: "A proposal of sub-carrier selecting MC-CDMA system for 4G systems" VEHICULAR TECHNOLOGY CONFERENCE, 2005. VTC-2005-FALL. 2005 IEEE 62ND DALLAS, TX, USA 25-28 SEPT., 2005, PISCATAWAY, NJ, USA,IEEE, 25 September 2005 (2005-09-25), pages 1188-1192, XP010878743 ISBN: 0-7803-9152-7 * Section C. * | 1-15 | |
| A | US 2002/136276 A1 (FRANCESCHINI MICHAEL R [US] ET AL) 26 September 2002 (2002-09-26) * claim 1 * | 1-15 | |
| A | HARADA M: "OFDM systems with trellis coded sequential modulation" VEHICULAR TECHNOLOGY CONFERENCE, 2005. VTC 2005-SPRING. 2005 IEEE 61ST STOCKHOLM, SWEDEN 30 APRIL - 01 MAY 2005, PISCATAWAY, NJ, USA,IEEE, 30 May 2005 (2005-05-30), pages 1086-1090, XP010855577 ISBN: 0-7803-8887-9 * Chapter II. * | 1,2 | TECHNICAL FIELDS SEARCHED (IPC) H04L |

The present search report has been drawn up for all claims

| Place of search | Date of completion of the search | Examiner |
|---|---|---|
| Munich | 14 November 2007 | Belloni, Paolo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 42 5357

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2007

| Patent document cited in search report | Publication date | Patent family member(s) | | Publication date |
|---|---|---|---|---|
| US 2002071496 A1 | 13-06-2002 | EP | 1126621 A1 | 22-08-2001 |
| | | FR | 2805102 A1 | 17-08-2001 |
| US 2002136276 A1 | 26-09-2002 | NONE | | |

EPO FORM P0459

For more details about this annex : see Official Journal of the European Patent Office, No. 12/82